# FASCICULE DE BREVET EUROPEEN

(11) **EP 1 703 308 B1**
(45) Date de publication et mention de la délivrance du brevet: **03.09.2008**
(21) Numéro de dépôt: 06290177.2
(22) Date de dépôt: 26.01.2006
(51) Int. Cl.: G02B 6/42, G02B 6/44

(54) **Dispositif de traversée étanche pour fibre optique**
Vorrichtung mit hermetisch dichter Durchführung für Lichtleitfaser
Device with hermetic feed-through for optical fibre

(30) Priorité: 16.03.2005 FR 0502619
(43) Date de publication de la demande: 20.09.2006
(73) Titulaire: Institut Français du Pétrole, 92852 Rueil Malmaison Cédex (FR)
(72) Inventeur: Wittrisch, Christian, 92500 Rueil-Malmaison (FR)

(56) Documents cités:
- EP-A- 0 383 511
- DE-A1- 4 016 694
- FR-A- 2 612 302
- US-A- 5 943 460
- US-B1- 6 268 565
- PATENT ABSTRACTS OF JAPAN vol. 009, no. 327 (P-415), 21 décembre 1985 (1985-12-21) -& JP 60 153005 A (DAINICHI NIPPON DENSEN KK), 12 août 1985 (1985-08-12)

## Description

L'objectif de la présente invention est de permettre la continuité d'une fibre optique mono ou multi mode et interposer une barrière étanche séparant deux milieux solides, liquide ou gazeux pouvant être différents en terme de composition et pression, et dans lesquels se trouve la fibre optique.

Le dispositif est avantageusement appliqué pour l'isolement et la protection de capteurs et/ou d'équipements par rapport à un milieu environnant.

Les traversées étanches pour des conducteurs électriques sont connues depuis longtemps, et des applications à des capteurs optiques et à des liaisons par fibres optiques sont de plus en plus répandues. Elles nécessitent des traversées étanches assurant le passage du signal optique et une isolation entre deux milieux.

Les traversées étanches optique disponibles dans l'industrie sont basées sur l'utilisation de composés polymères assurant la liaison mécanique entre la fibre optique et le support mécanique. Cette technologie ne peut être mise en oeuvre qu'en usine sur une courte longueur de fibre optique (voir par exemple le document US 6 268 565).

Les exigences du milieu en terme de pression, nature des fluides, températures, durée d'utilisation limitent les utilisations de certains matériaux polymères. Les matériaux polymères ne sont pas inertes. Leurs propriétés mécaniques évoluent dans le temps, vieillissent et ne jouent plus leur rôle de barrière étanche.

Une autre technologie de traversée étanche de fibre optique consiste à utiliser une fibre optique revêtue localement d'un dépôt métallique sur le verre de la fibre optique. Ce dépôt métallique est utilisé comme base d'accrochage d'une brasure métallique assurant une continuité et une cohésion avec le support métallique. Cette technique nécessite une préparation de la fibre optique et une brasure qui ne peut être effectuée qu'en usine sur une longueur réduite de fibre optique puisqu'il faut enfiler la fibre optique dans le conduit du support qui est un passage de diamètre d'environ 0,2mm sur une longueur d'environ 20 mm.

Ainsi, la présente invention concerne un dispositif d'étanchéité pour fibre optique, caractérisé en ce qu'il comprend en combinaison une pluralité de mors coniques métalliques dans l'axe desquels passe la fibre optique, un corps comportant un cône femelle métallique correspondant pour recevoir lesdits mors, un écrou vissé sur ledit corps à l'entrée du cône pour comprimer l'ensemble des mors de façon à obtenir une étanchéité métal-métal entre les mors et le cône femelle, un carter lié au corps et recouvrant l'écrou de façon à former autour un volume au moins partiellement confiné, un matériau de remplissage d'au moins une partie du volume, et en ce que le matériau comporte des charges solides favorisant l'étanchéité entre le corps, les mors et la fibre.

Dans le dispositif, les charges dudit matériau peuvent être métalliques.

La plus grande surface des mors coniques peut être de préférence dirigée coté haute pression.

Le corps peut comporter au moins deux cônes femelles dans lesquels deux ensembles de mors sont placés pour former une double étanchéité.

Les ensembles coniques peuvent être disposés en opposition par rapport à l'axe de la fibre.

Toutes les surfaces de chaque mors conique peuvent être revêtues d'une couche de matériau ductile, métallique, organique ou minéral.

Le revêtement peut comprendre de l'or.

Dans le domaine de l'exploitation des gisements pétroliers, l'invention peut être utilisée en fond de puits. Dans ce cas, il est nécessaire de disposer des traversées étanches de fibres optiques isolant la partie capteur optique ou connecteur optique de la ligne de transmission par fibre optique entre le fond du puits et la surface. Les traversées étanches sont utilisées chaque fois que l'on rencontre une discontinuité due à une séparation physique de milieux, comme un obturateur annulaire (packer) ou les passages au niveau de la tête de puits, qu'elle soit sous-marine ou aérienne.

Les performances des traversées étanches optiques utilisées pour des applications pétrolières en fond de puits sont particulièrement sévères en terme de pression pouvant atteindre 1500 bar, en terme de température pouvant être supérieure à 200°C, et compte tenu de la nature des fluides liquides ou gaz. De plus, il est demandé une fiabilité dans le temps de durée supérieure à 10 ans.

Cependant, la présente invention ne se limite pas aux seules applications pétrolières, les traversées étanche optiques peuvent être aussi utilisées pour des applications industrielles chimiques, nucléaires, etc.

Bien entendu, la barrière étanche ne doit pas affecter la transmission de données par le coeur de la fibre optique

Le dispositif selon l'invention présente les avantages suivants:
- il n'utilise pas de composés en polymère pour assurer l'étanchéité. Seule, une graisse, ou "compound" est utilisée, dont les fonctions et nature sont décrits ci-après.
- il n'est composé que d'éléments métalliques positionnés autour de la fibre et d'éléments de verrouillage vissés,
- il peut être positionné sur la fibre sans être obligé de la couper,
- il ne nécessite pas d'opérations de fabrication en usine de l'élément barrière,
- il est possible d'effectuer le montage d'une traversée étanche sur une site pétrolier à partir de composants mécaniques assemblés.

La présente invention sera mieux comprise et ses avantages apparaîtront plus clairement à la lecture de la description suivante d'exemples de réalisation, nullement limitatifs, illustrés par les figures ci-après annexées, parmi lesquelles:
- la figure 1 montre en coupe les éléments mécaniques du dispositif;
- la figure 2 montre une variante du dispositif;
- la figure 3 illustre une mise en oeuvre de l'invention;
- la figure 4 montre une autre variante.

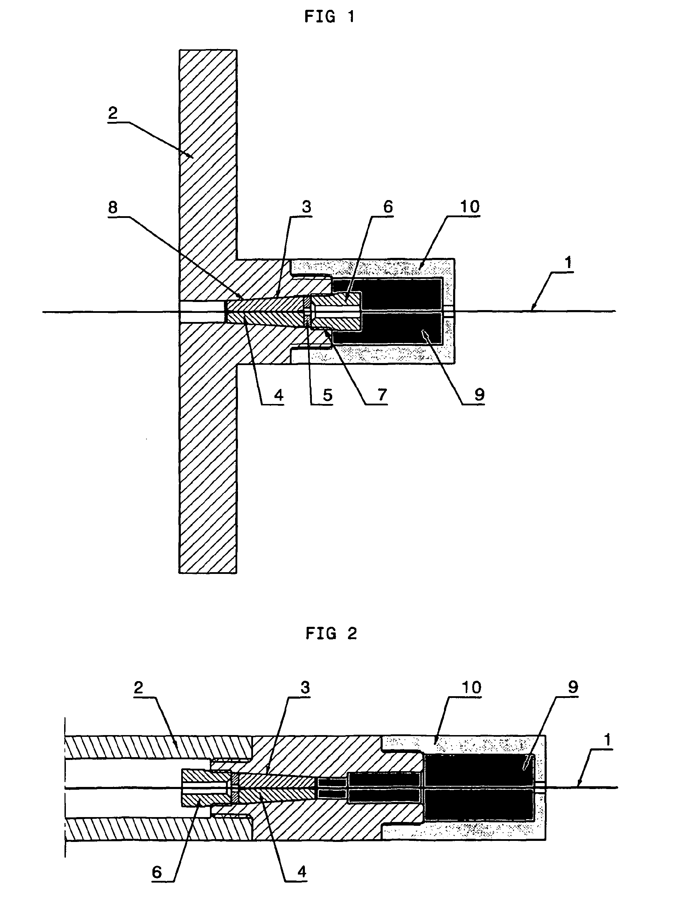

Sur la figure 1, la fibre optique 1 qui passe au travers de la barrière étanche est de type mono mode (par exemple de CEDI SMT A1310H), de diamètre extérieur de 155 µm. La section de la fibre comprend, de l'intérieur vers l'extérieur, un coeur de fibre de diamètre 9,3 µm, une épaisseur de "clading" de diamètre 125 µm. Le revêtement extérieur en polyimide a donc une épaisseur de 15 µm. La température d'utilisation d'une telle fibre est au maximum de 300°C.

Il existe également des fibres optiques à revêtement métallique pour des utilisations jusqu'à 700°C (par exemple fabriquée par Oxford Electronic).

Selon l'invention proposée, la traversée étanche est constituée des éléments mécaniques suivants:
Un corps extérieur 2 solidaire de l'élément relié à la partie à isoler, par exemple un boîtier de capteur de mesure (Pression et/ou Température), un connecteur optique, ou tout autre élément comme traversée de "packer" ou tête de puits sous-marine.

Le corps extérieur 2 comporte un élément femelle 3, du type douille, usiné en cône ayant un angle défini, une précision d'usinage et un revêtement de surface spécifique.

Les moyens de tenue de la fibre comprennent de préférence trois mors 4 de forme conique complémentaire à la partie femelle de l'élément extérieur 3.

Les trois mors 4 sont usinés avec une précision définie pour enserrer parfaitement la fibre optique. L'alésage selon l'axe des mors est en contact avec le revêtement de la surface externe de la fibre optique, qui peut être du polyimide ou métallique. Ce revêtement a généralement une épaisseur d'environ 15 µm, ce qui explique le niveau de précision demandé pour l'usinage de la douille conique 3 et des mors 4.

Les mors 4 sont positionnés par une rondelle 5 de façon à avoir un contact parfaitement plan lors de la poussée dans le logement conique de la douille 3 par un écrou male 6. L'écrou 6 est vissé dans la partie extérieure 2 par un filetage 7. Le blocage de l'écrou transmet un effort de poussée, par l'intermédiaire de la rondelle 5, sur les mors coniques 4 pour obtenir une étanchéité métal-métal entre les mors et le cône femelle de la douille 3.

Pour assurer une meilleure étanchéité (ce n'est qu'une option), un dépôt métallique 8 (de l'or par exemple) peut être déposé sur toute la surface externe des mors 4, ainsi qu'à la surface intérieure du cône complémentaire de la douille 3. Ce métal mou (par exemple l'or) améliore par son fluage le contact métal-métal entre les surfaces coniques, ainsi que le contact entre les surfaces planes entre chacun des mors.

Les mors coniques sont disposés de façon que la force appliquée par l'écrou 6, et la force de pression du milieu extérieur, poussent sur la grande section du cône dans le sens de l'augmentation de l'effet de contact et ainsi augmenter l'étanchéité sous pression.

Un matériau 9, du type graisse, ou équivalent (dénommé "compound" par la profession) est disposé sur la partie du dispositif soumise à la pression, dans le volume définis par le carter 10 vissé sur le corps extérieur 2. La fonction de ce matériau 9 est de colmater les micro passages pouvant exister entre les mors, entre les mors et la fibre optique, ou entre la partie conique des mors et la partie extérieure. Les micro espaces à colmater sont localement possibles dus à des irrégularités d'usinage des pièces coniques complémentaires 2 et 4. Ces espace restent limités de l'ordre de quelques microns. Ils devront être colmatés définitivement pour assurer l'étanchéité métal-métal. La solution est identique au problème similaire du vissage de tubes de production pétrolière où les éléments de tubes sont vissés bout à bout pour assurer une continuité étanche entre le fond (zone de production) et la surface. Les filetages des tubes sont enduits d'une graisse épaisse (API compound) qui a pour caractéristique de contenir de très fines particules micronisées métalliques associées à un liant comme de la graisse à base d'hydrocarbure. Ces particules métalliques et le liant colmatent les faibles interstices compris entre les filetages male et femelle pour assurer une étanchéité métal-métal des filetages. Ce principe est donc envisagé pour remplir les micro interstices (bien plus petit que ceux rencontrés avec les filetages) pour colmater définitivement le dispositif de traversée étanche avec fibre optique. La pression hydraulique appliquée pour vérifier la tenue de l'intégralité de la traversée, forcera les micro particules métalliques dans les micro interstices. La pression appliquée peut être la pression maximum d'utilisation, par exemple comprise entre 1000 et 1500 bar.

Le matériau "compound" à base de graisse permet de facilement démonter le dispositif de traversée étanche.

Un autre type de matériau peut être utilisé, par exemple à base de colle qui assure le verrouillage des écrous. Le collage des pièces de la traversée assure l'étanchéité. Cependant, le démontage est plus difficile et nécessite le chauffage des liaisons pour détruire la colle.

Selon la figure 2, le dispositif peut comprendre des mors disposés en inverse, c'est à dire pour lesquels la pression extérieure appliquée a tendance à décoller les mors coniques et non à les enfoncer dans le cône du support extérieur 2. Dans ce cas, l'écrou 6 qui pousse les mors coniques dans le support applique une force bien supérieure à l'effet du à la pression pour maintenir l'étanchéité métal-métal.

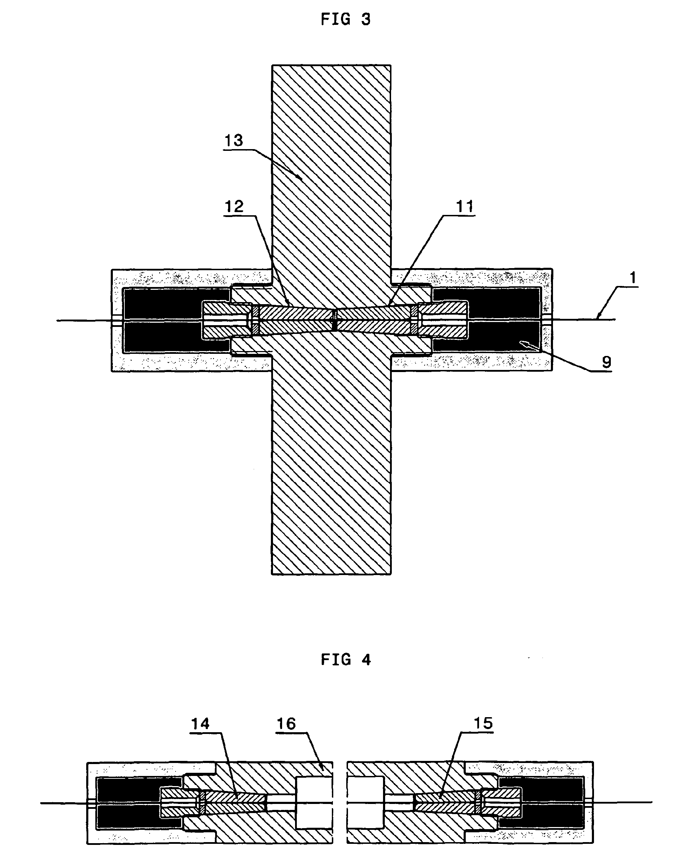

Selon la figure 3, l'invention est appliquée avantageusement à une double traversée étanche, ou traversée de cloison 13, dans laquelle deux ensembles de mors 11 et 12 sont disposés tête bêche, ou inversés. Les pressions extérieures P1 et P2 appliquées de part et d'autre de la cloison 13 peuvent être très différentes Ces pression s'appliquent indifféremment sur les deux cotés des éléments coniques orientés de telle façon que les pressions ont tendance à augmenter les forces d'application sur les cônes respectifs.

L'invention n'est pas limitée à ce montage, mais également à une double traversée étanche dans laquelle on dispose les deux ensembles de mors tous les deux dans le même sens, la pression extérieure pouvant s'appliquer indifféremment sur les deux cotés.

La figure 4 illustre une mise en oeuvre spécifique du dispositif dans laquelle la fibre optique doit traverser un équipement, par exemple de mesure, ou un "packer". Les deux traversées 14 et 15 sont disposées aux extrémités d'un tube 16.

### Essai:

Le montage prototype utilisé est conforme à celui de la figue 4, à deux traversées étanches.

La fibre optique est parfaitement positionnée entre les mors, la rondelle positionnée, l'écrou légèrement vissé puis un peu dévissé. Le cône et les mors étant renversés vers le bas, les mors sont repoussés pour les appliquer sur la rondelle. On vérifie que la fibre optique reste bien centrée, puis on visse l'écrou pour repousser les mors dans le cône. On bloque l'écrou au couple déterminé en fonction de ces caractéristiques mécaniques. On vérifie à nouveau que la fibre optique est bien centrée et non pas pincée entre le mors.

On utilise un matériau "compound" du type graisse haute température chargée métal.

Le dispositif est soumis à une pression hydraulique:
- 700 bar à température ambiante, pendant 3 jours : pas de fuite.
- 1250 bar à 200°C : étanche pendant au moins 15 jours.

## Revendications

1. Dispositif d'étanchéité pour fibre optique, **caractérisé en ce qu'**il comprend en combinaison une pluralité de mors coniques (4) métalliques dans l'axe desquels passe la fibre optique (1), un corps (2) comportant un cône femelle (3) métallique correspondant pour recevoir lesdits mors, un écrou (6) vissé sur ledit corps à l'entrée du cône pour comprimer l'ensemble des mors de façon à obtenir une étanchéité métalmétal entre les mors et le cône femelle, un carter (10) lié au corps et recouvrant l'écrou de façon à former autour un volume au moins partiellement confiné, un matériau de remplissage (9) d'au moins une partie du volume, et **en ce que** le matériau comporte des charges solides favorisant l'étanchéité entre le corps, les mors et la fibre.

2. Dispositif selon la revendication 1, dans lequel les charges dudit matériau sont métalliques.

3. Dispositif selon l'une des revendications précédentes, dans lequel la plus grande surface des mors coniques est dirigée coté haute pression.

4. Dispositif selon l'une des revendications précédentes, dans lequel le corps comporte au moins deux cônes femelles dans lesquels deux ensembles de mors sont placés pour former une double étanchéité.

5. Dispositif selon la revendication 4, dans lequel les ensembles coniques sont disposés en opposition par rapport à l'axe de la fibre.

6. Dispositif selon l'une des revendications précédentes, dans lequel toutes les surfaces de chaque mors conique sont revêtues d'une couche de matériau ductile.

7. Dispositif selon la revendication 6, dans lequel le revêtement est métallique.

## Claims

1. A sealing device for optical fibre, **characterised in that** it comprises, in combination, a plurality of metallic conical clamping bits (4) in the axis of which the optical fibre (1) passes, a body (2) comprising a corresponding metallic female cone (3) for receiving said clamping bits, a nut (6) screwed onto said body at the entrance of the cone in order to compress all of the clamping bits so as to obtain a metal-metal seal between the clamping bits and the female cone, a housing (10) linked to the body and covering the nut so as to form around it a volume which is at least partially confined, a material (9) for filling at least a part of the volume, and **in that** the material comprises solid fillers which promote sealing between the body, the clamping bits and the fibre.

2. The device according to claim 1, wherein the fillers of said material are metallic.

3. The device according to one of the preceding claims, wherein the largest surface of the conical clamping bits is directed to the high-pressure side.

4. The device according to one of the preceding claims, wherein the body comprises at least two female cones in which two clamping bit assemblies are arranged in order to form a double seal.

5. The device according to claim 4, wherein conical assemblies are arranged in an opposing manner relative to the axis of the fibre.

6. The device according to one of the preceding claims, wherein all of the surfaces of each conical clamping bit are coated with a layer of ductile material.

7. The device according to claim 6, in which the coating is metallic.

## Patentansprüche

1. Abdichtvorrichtung für Lichtleitfaser, **dadurch gekennzeichnet, dass** sie kombiniert mehrere kegelförmige metallische Backen (4) aufweist, in deren Achse die Lichtleitfaser (1) durchgeht, einen Körper (2), der einen entsprechenden metallischen Buchsenkegel (3) aufweist, um die Backen aufzunehmen, eine Mutter (6), die am Eingang des Kegels auf den Körper geschraubt ist, um die Backeneinheit derart zusammenzudrücken, dass eine Metall-Metall-Abdichtung zwischen den Backen und der Kegelbuchse erzielt wird, ein Gehäuse (10), das mit dem Körper verbunden ist und die Mutter derart abdeckt, dass um sie ein Volumen ausgebildet wird, das zumindest teilweise umschlossen ist, ein Füllmaterial (9) für mindestens einen Teil des Volumens, und dass das Material Feststofffüllstoffe aufweist, die das Abdichten zwischen dem Körper, den Backen und der Faser begünstigen.

2. Vorrichtung nach Anspruch 1, bei der die Füllstoffe des Materials metallisch sind.

3. Vorrichtung nach einem der vorhergehenden Ansprüche, bei der die größte Fläche der kegelförmigen Backen zu der Hochdruckseite ausgerichtet ist.

4. Vorrichtung nach einem der vorhergehenden Ansprüche, bei der der Körper mindestens zwei Kegelbuchsen aufweist, in welchen zwei Backeneinheiten platziert sind, um eine doppelte Abdichtung zu bilden.

5. Vorrichtung nach Anspruch 4, bei der die kegelförmigen Einheiten entgegen gesetzt in Bezug zu der Achse der Faser angeordnet sind.

6. Vorrichtung nach einem der vorhergehenden Ansprüche, bei der alle Oberflächen jeder kegelförmigen Backe mit einer Schicht aus dehnbarem Material beschichtet sind.

7. Vorrichtung nach Anspruch 6, bei der die Beschichtung metallisch ist.
